# EUROPÄISCHE PATENTSCHRIFT

(11) **EP 0 991 489 B1**
(45) Veröffentlichungstag und Bekanntmachung des Hinweises auf die Patenterteilung: **06.03.2002**
(21) Anmeldenummer: 98940081.7
(22) Anmeldetag: 23.06.1998
(51) Int. Cl.: B23B 51/02

(54) **SPIRALBOHRER ZUM TROCKENBOHREN**
TWIST DRILL FOR DRY BORING
FORET HELICOIDAL POUR PER AGE A SEC

(30) Priorität: 25.06.1997 DE 19726984
(43) Veröffentlichungstag der Anmeldung: 12.04.2000
(73) Patentinhaber: KENNAMETAL INC., Latrobe, PA 15650-0231 (US)
(72) Erfinder: BORSCHERT, Bernhard, D-90408 Nürnberg (DE); SEIDEL, Jürgen, D-91097 Oberreichenbach (DE)
(74) Vertreter: Tergau & Pohl Patentanwälte
(86) Internationale Anmeldenummer: EP9803841
(87) Internationale Veröffentlichungsnummer: WO9900209

(56) Entgegenhaltungen:
- EP-A- 0 103 235
- EP-A- 0 249 104
- EP-A- 0 427 857
- DE-A- 3 020 948
- DE-U- 8 522 451
- GB-A- 147 631
- US-A- 2 576 664

## Beschreibung

Die Erfindung betrifft einen Spiralbohrer zum Trockenbohren mit den Merkmalen des Oberbegriffs des Anspruches 1 und wie er z.B. aus EP-A-0 249 104 bekannt ist.

Die Spannuten und der Bohrerkern unterscheiden sich also nicht von einem ganz normalen Bohrer, dessen Spannuten und dessen Bohrerkern symmetrisch zur Bohrerachse ausgebildet sind. Die Achssymmetrie betrifft auch diejenigen Teile der Schneiden, deren Spanflächen im Bereich der Spannuten liegen.

Der Verzicht auf die Zugabe eines Kühlschmierstoffes beim Bohren spart erhebliche Kosten für die Entsorgung bzw. für die bekannten Aufwendungen ein, die durch den Kühlschmierstoff verursacht werden. Es wird daher allgemein angestrebt, Bohrer aus solchen Werkstoffen bzw. mit solchen Schneidengeometrien herzustellen, die ein Trockenbohren ermöglichen. Das verursacht auf der anderen Seite Probleme wie Schwierigkeiten bei der Spanabfuhr, erhöhter Verschleiß an den Schneidecken und den Führungsfasen, starke Erwärmung des Bohrers sowie beim Rückzug des Bohrers nach vollzogenem Bohrvorgang laute Geräusche mit Funkenflug oder gar Bohrerbruch. Schnittkraftmessungen zeigen, daß beim Rückzug des Bohrers aus der Bohrung Drehmomente auftreten können, die das zum Bohren erforderliche Drehmoment noch übersteigen. Als weitere Kraftkomponente tritt beim Rückzug des Bohres eine negative Vorschubkraft auf, die sogar zum Abreißen des Bohrers führen kann.

Die beim Rückzug des Bohrers nach vollzogenem Bohrvorgang zu beobachtenden Probleme beruhen auf der beim Trockenbohren erhöhten Erwärmung des Bohrers im Bereich der Bohrerschneiden. Diese während des Bohrvorganges zunehmende Erwärmung des Bohrers führt zu einer kontinuierlichen Durchmesservergrößerung des Bohrers und somit auch der Bohrung, die mit zunehmender Bohrtiefe zunimmt. Das läßt sich in Abhängigkeit von der Temperatur des Bohrers in dessen Schneidenbereich einfach rechnerisch ermitteln. Neben der reinen durch die Spanbildung verursachten Zerspanungswärme resultiert eine weitere Erwärmung aus dem Reiben der Führungsphasen bzw. Nebenschneiden an der Bohrungswandung. Hier erfolgt kein Schneiden sondern mehr ein Schaben mit negativen Spanwinkeln. Allerdings wirkt sich auch dort nachteilig die mit der Erwärmung verbundene Durchmesservergrößerung aus. Die Folge ist zusammenfassend, daß am Ende des Bohrvorgangs der Bohrerdurchmesser und dementsprechend auch der Durchmesser der Bohrung größer sind als am Bohrungsanfang. Das führt beim Rückzug des Bohrers zu einer starken Verklemmung in der Bohrung. Eine Folge dieser Verklemmung ist eine noch stärkere Erwärmung des Werkzeuges, dessen damit verbundene weitere Ausdehnung, die erwähnten lauten Bohrgeräusche und der nachweisbare Drehmomentanstieg beim Rückzug des Bohrers aus der Bohrung.

In der einschlägigen Fachliteratur wird immer wieder darauf hingewiesen, daß die geschilderten Probleme beim Trockenbohren durch Kühlung der Bohrer mittels Druckluft zu umgehen sind. Es können auch eine Mindermengenschmierung oder die Verwendung spezieller Gleitstoffbeschichtungen Abhilfe schaffen.

Der Erfindung liegt die Aufgabe zugrunde, einen Bohrer zum Trockenbohren zu schaffen, der allein aufgrund seiner Schneidengeometrie die geschilderten Nachteile vermeidet. Diese Aufgabe wird dadurch gelöst, daß allein diejenigen Teile seiner Schneiden, deren Spanflächen im Bereich des Kerndurchmessers liegen, insbesondere die Bohrerquerschneide eine gewollte Asymmetrie erhält.

Es ist bereits für Bohrer zum Bohren von aus Kunstharz gebildeten Leiterplatten vorgeschlagen worden, die gesamten Bohrerschneiden außermittig, also asymmetrisch zu gestalten (DE 26 55 452 A). Dort handelte es sich aber um Bohrer für ein Sonderanwendungsgebiet, wo der zu bohrende Werkstoff, nämlich aus Kunstharz gebildete Leiterplatten nur einen geringen Schneidenverschleiß bewirken. Der besondere Werkstoff verursacht dort aber das Problem der Abfuhr des Bohrmehls und zur Lösung dieses Problems wird dort eine grundsätzlich asymmetrische Schneidengestaltung empfohlen. Eine Übertragung der dortigen Lösung auf Universalbohrer ist problematisch schon wegen des dadurch nicht mehr vorhandenen zentrischen Anschnittes. Außerdem führen asymmetrische, z.B. unterschiedlich lange Hauptschneiden zu einem nachteiligen Bohrergebnis. Die einschlägige Lehre auf dem Bohrergebiet ist darauf gerichtet, insbesondere Unterschiede im Spitzenwinkel sowie eine Außermittenlage der Bohrerspitze und Schneidenhöhendifferenzen der Hauptschneiden unbedingt zu vermeiden. Gerade Schneidenhöhendifferenzen beim Bohren ergeben nämlich unterschiedliche Spanquerschnitte und die wirken stark verschleißfördemd.

Ein aus US 5,078,554 = EP 0 427 857 B1 bekannter Bohrer weist einen asymmetrischen Kemdurchmesser und asymmetrische Spannuten - jeweils bezogen auf die Bohrerachse - auf. Dementsprechend ist auch der Querschneidenverlauf asymmetrisch. Die totale Asymmetrie dieses Bohrers verfolgt den Zweck, eine übermäßige Vergrößerung des gebohrten Loches mit zunehmender Lochtiefe zu vermeiden, die beim Erfindungsgegenstand nicht nur hingenommen sondern sogar angestrebt wird. Ein wichtiger Anwendungsfall ist nämlich die Bearbeitung von Kurbelwellen zum Zwecke ihres Auswuchtens. Dabei werden die Bohrungen zur Veränderung des Wuchtverhaltens der Kurbelwelle eingebracht. Der Bohrvorgang erfolgt auf der Wuchtmaschine selbst, nämlich bei zum Zwecke des Wuchtens eingespannter Kurbelwelle, deren Einspannung also zur Veränderung des Wuchtverhaltens nicht geändert zu werden braucht. Für das Wuchten sind der Wuchtmaschine zugeordnete Sensoren eingesetzt. Deren Arbeitsgenauigkeit würde aber durch Kühl- bzw. Spritzwasser negativ beeinflußt. Daher ist unter den genannten Umständen das Trockenbohren notwendig. Dafür kommt es weniger auf die Genauigkeit des Bohrloches als auf einen gezielten und schnellen Werkstoffabtrag an.

Gegenüber den bekannten, vorstehend näher erörterten Lösungen beschränkt sich die erfindungsgemäß vorgeschlagene Asymmetrie auf den Spitzenanschliff, nämlich auf die Gestaltung praktisch der Querschneide ohne Einflußnahme auf die Hauptschneiden. Es ist also der in Axialrichtung vor dem Bohrerkern liegende Schneidenbereich von der gewollten Asymmetrie betroffen. Die erfindungsgemäße Lösung hat zur Folge, daß sich der Bohrer beim Bohren exzentrisch freischneidet. Der Anschliff ist so wirksam, daß der Bohrer zunächst zentrisch anbohrt. Die Bohrerspitze liegt nämlich auf der Bohrerachse. Während des weiteren Bohrvorganges kommen die asymmetrischen Anteile praktisch der Querschneide in Eingriff. Durch ihre asymmetrischen Anteile werden Druckkomponenten erzeugt, die den Bohrer während des Bohrvorganges von der durch die Bohrungsachse vorgegebenen Ideallinie radial in Richtung der Querschneide auslenken. Dadurch wird mit dem rotierenden Bohrer eine Bohrung erzeugt, deren Druchmesser ca. 1 ‰ bis 1 % größer ist als der Ist-Durchmesser des Bohrers. Dadurch wird bei seinem Rückzug ein Verklemmen weitgehend vermieden, was durch Schnittkraftmessung nachweisbar ist. Nachteile, wie sie bei asymmetrischer Ausgestaltung der Hauptschneiden wie beim Stand der Technik gemäß DE 26 55 452 A im universalen Anwendungsbereich zu erwarten wären, werden hier weitgehend vermieden. Das von den beiden Einzelquerschneiden zu zerspanende Volumen bleibt nämlich trotz der angestrebten Asymmetrie weitgehend gleich.

Der Erfindungsgegenstand im einzelnen wird anhand der Figuren beispielsweise beschrieben. Es zeigen:
- Fig. 1: in stark übertriebener Weise einen Schnitt durch eine beim Trockenbohren grundsätzlich erzeugte Bohrung.
- Fig. 2: eine Draufsicht auf die Bohrerspitze mit unterschiedlich langen Einzelquerschneiden.
- Fig. 3: eine Draufsicht auf die Bohrerspitze analog Fig. 2 mit unterschiedlichen Radien am Übergang zwischen den Hauptschneiden und den Einzelquerschneiden.
- Fig. 4: eine Draufsicht auf die Bohrerspitze analog Fig. 2 oder 3 mit unterschiedlicher Winkelstellung der Einzelquerschneiden zu den zugeordneten Hauptschneiden.

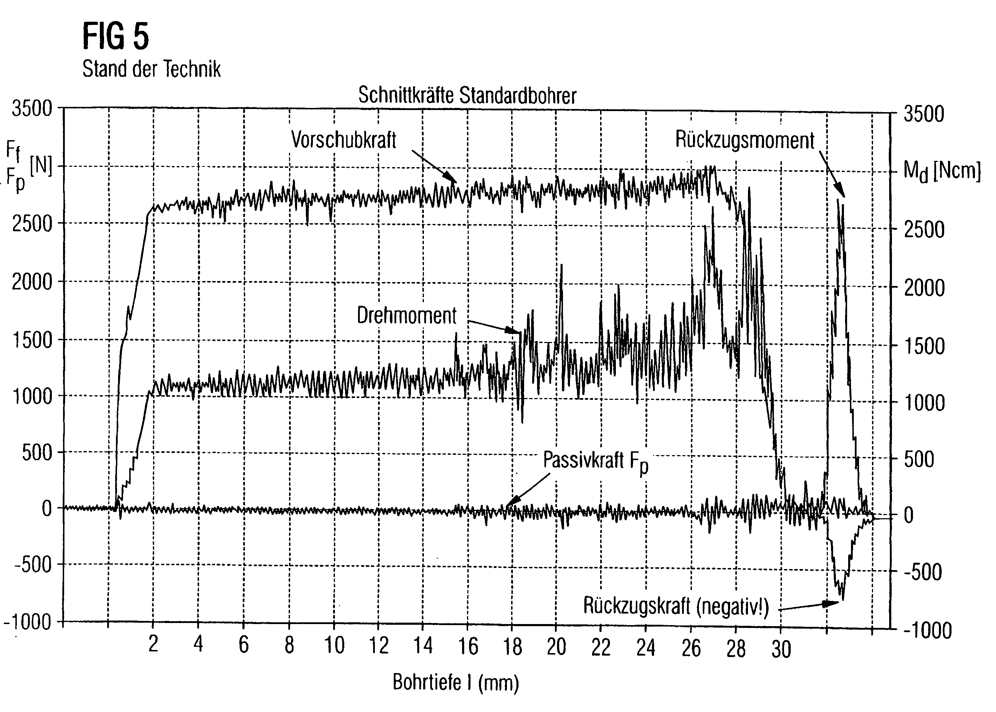

- Fig. 5: ein Schnittkraftdiagramm über die Bohrtiefe bei einem herkömmlich ausgestalteten Bohrer.

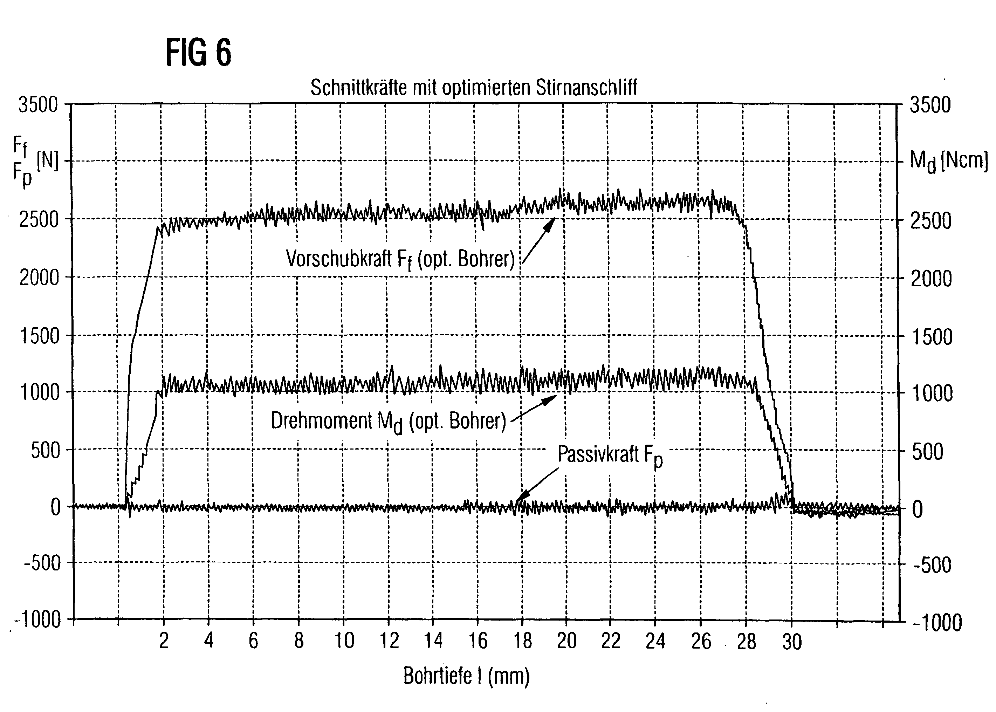

- Fig. 6: ein Schnittkraftdiagramm analog Fig. 5 eines mit einer erfindungsgemäßen Querschneide ausgestatteten Bohrers.

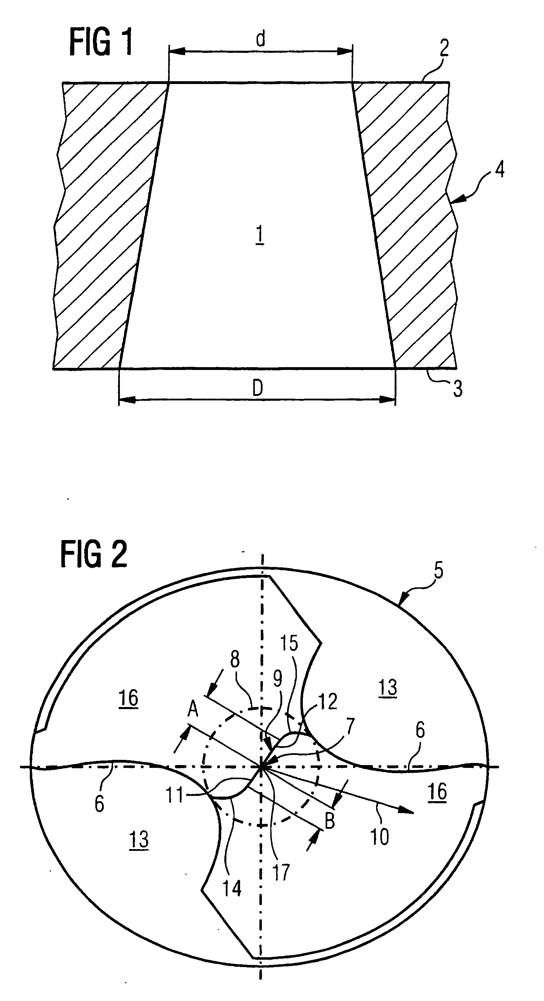

Das in Fig. 1 im Querschnitt dargestellte Bohrloch 1 ist von der Oberseite 2 in Richtung auf die Unterseite 3 des Werkstückes 4 eingebracht. d kennzeichnet den Bohrungsdurchmesser beim Bohrereintritt und D den Bohrungsdurchmesser beim Bohreraustritt. Der sich vom Bohrereintritt (d) zum Bohreraustritt (D) erweiternde Wirkdurchmesser der Bohrung 1 beruht auf der kontinuierlichen Erwärmung des Bohrers insbesondere im Bereich der Bohrerschneiden während des Bohrvorganges. Die in Fig. 1 dargestellte Konizität ist stark übertrieben dimensioniert.

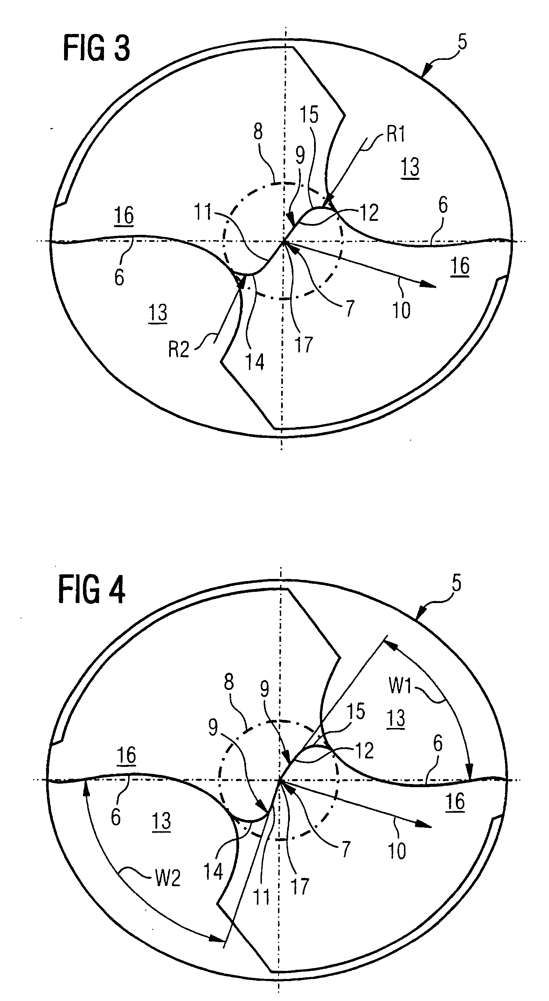

Der insgesamt mit 5 bezeichnete Bohrer enthält die beiden Hauptschneiden 6. Die Spanflächen 16 der Hauptschneiden 6 liegen im Bereich der Spannuten oder Spannkammem 13. Die Hauptschneiden 6 sind symmetrisch zur Bohrerachse 7, welche lotrecht zur Zeichnungsebene der Fig. 2-4 verläuft und die Bohrerspitze 17 enthält. Der durch einen strichpunktierten Kreis verdeutlichte Bohrerkern 8 wird an seiner die Bohrerspitze 17 enthaltenden Stirnseite von der Gesamt-Querschneide 9 überspannt. Sie zeichnet sich in Draufsicht auf die Bohrerspitze 17 (Fig. 2-4) durch eine S-ähnliche Form aus, die mit ihren beiden gebogenen Enden als Übergangsradien in jeweils einem stumpfen Winkel W1 bzw. W2 in die Hauptschneiden 6 übergeht (Fig. 4), und zwar bezogen auf die Fig. 2-4 in Radialrichtung 10 nach außen.

Die Querschneide 9 insgesamt wird gebildet durch zwei Einzelquerschneiden 11, 12, deren Spanflächen im Bereich des Bohrerkerns 8 liegen und die sich von der Bohrerachse 7 in Radialrichtung 10 nach außen bis zu den Spannuten bzw. Spankammern 13 erstrecken. Die beiden Einzelquerschneiden 11, 12 besitzen in der Ausführungsform nach Fig. 2 bis zu ihrem Übergang in ihre Querschneidenradien 14, 15 eine unterschiedliche Länge, die in Fig. 2 durch die unterschiedlichen Maße A und B gekennzeichnet ist. Bei der Ausführungsform nach Fig. 3 weichen die Querschneidenradien 14, 15 in ihrer Größe voneinander ab, wie sie in Fig. 3 durch die Größenpfeile R1 und R2 dargestellt sind. Es können gemäß Ausführung nach Fig. 4 auch die von der Bohrerachse 7 ausgehenden Einzelquerschneiden 11, 12 mit ihren zugehörigen Hauptschneiden 6 unterschiedliche Winkel einschließen. Das ist in Fig. 4 durch unterschiedliche Winkelabmessungen W1 und W2 zum Ausdruck gebracht. Für die gewünschte Asymmetrie stehen also als veränderbare Parameter die Längen A bzw. B (Fig. 2) der Einzelquerschneiden 11, 12, die Querschneidenradien R1 bzw. R2 (Fig. 3) und/oder die unterschiedlichen Winkelgrößen W1 bzw. W2 (Fig. 4) zur Verfügung. Die angestrebte Asymmetrie oder die angestrebten Asymmetrien kann oder können sowohl durch Abweichungen nur hinsichtlich eines der vorgenannten Parameter als auch durch Abweichungen gemeinsam mehrerer oder aller drei Unterschiedsparameter hergestellt werden.

In quantitativer Hinsicht haben sich Abmessungsunterschiede entsprechend den Ansprüchen 5 bis 7 als vorteilhaft herausgestellt. Die erfindungsgemäßen Asymmetrien werden in der Regel an zweischneidigen Bohrern eingesetzt. Sie sind aber von besonderem Vorteil an dreischneidigen Bohrern, weil ein dreischneidiger Bohrer in statisch bestimmter Weise mit seinen Schneidecken an der Bohrerwandung abgestützt ist und deswegen ein radiales Ausweichen im Vergleich mit einem nur zweischneidigen Bohrer erschwert ist.

Das Herstellungsverfahren und die Geometrie der Hauptschneiden 6 entsprechen dem Gegenstand von EP 0 249 104 B1.

## Patentansprüche

1. Spiralbohrer zum Trockenbohren mit einem zentrischen Kern (8), mit auf der Bohrerachse (7) liegender Bohrerspitze (17) und mit der Bohrerachse (7) als Symmetrieachse sowohl der Spannuten (13) als auch der Hauptschneiden (6), nämlich derjenigen Teile der Schneiden, deren Spanflächen (16) im Bereich der Spannuten (13) liegen
**gekennzeichnet durch**
eine Asymmetrie derjenigen Teile seiner Schneiden, deren Spanflächen im Bereich des Bohrerkerns (8) liegen, insbesondere seiner Gesamt-Querschneide (9).

2. Bohrer nach Anspruch 1,
**dadurch gekennzeichnet,**
**daß** die von der Bohrerachse (7) im wesentlichen in Radialrichtung (10) abgehenden Teile seiner Schneiden, deren Spanflächen im Bereich des Kerndurchmessers liegen, insbesondere die Einzelquerschneiden (11,12) eine unterschiedliche Länge (A,B) besitzen.

3. Bohrer nach Anspruch 1 oder 2,
**dadurch gekennzeichnet,**
**daß** die von der Bohrerachse (7) im wesentlichen radial abgehenden Teile seiner Schneiden, deren Spanflächen im Bereich des Kerndurchmessers liegen, insbesondere die Einzelquerschneiden (11,12) unterschiedliche Radien (R1,R2) am Übergang zwischen Haupt- (6) und Querschneide (9) aufweisen.

4. Bohrer nach einem der Ansprüche 1 bis 3,
**dadurch gekennzeichnet,**
**daß** die von der Bohrerachse (7) im wesentlichen radial abgehenden Teile seiner Schneiden, deren Spanflächen im Bereich des Kerndurchmessers liegen, insbesondere die Einzelquerschneiden (11,12) mit der zugehörigen Hauptschneide (6) unterschiedliche Winkel (W1,W2) einschließen (Fig. 4).

5. Bohrer nach Anspruch 2,
**dadurch gekennzeichnet,**
**daß** die Längendifferenz (A-B) der Teile seiner Schneiden, deren Spanflächen im Bereich des Kemdurchmessers liegen, insbesondere der Einzelquerschneiden (11,12) mindestens 5% beträgt.

6. Bohrer nach Anspruch 3,
**dadurch gekennzeichnet,**
**daß** die Differenz der Radien (R2-R1) mindestens 10% beträgt.

7. Bohrer nach Anspruch 4,
**dadurch gekennzeichnet,**
**daß** die Winkeldifferenz (W2-W1) mindestens 1° beträgt.

8. Bohrer nach einem der Ansprüche 1 bis 7,
**gekennzeichnet durch**
zwei Bohrerschneiden (6).

9. Bohrer nach einem der Ansprüche 1 bis 8,
**gekennzeichnet durch**
drei Bohrerschneiden (6).

## Claims

1. Twist drill for dry drilling having a central core (8), having a drill bit (17) lying on the drill axis (7) and having the drill axis (7) as an axis of symmetry both of the flutes (13) and of the main cutting edges (6), namely of those parts of the cutting edges whose cutting faces (16) lie in the region of the flutes (13), **characterized by** those parts of its cutting edges whose cutting faces lie in the region of the drill core (8), in particular of its entire chisel edge (9), being asymmetrical.

2. Drill according to Claim 1, **characterized in that** those parts of its cutting edges which emanate essentially in the radial direction (10) from the drill axis (7) and whose cutting faces lie in the region of the core diameter, in particular the individual chisel edges (11, 12), differ in length (A, B).

3. Drill according to Claim 1 or 2, **characterized in that** those parts of its cutting edges which emanate essentially radially from the drill axis (7) and whose cutting faces lie in the region of the core diameter, in particular the individual chisel edges (11, 12), have different radii (R1, R2) at the transition between the main cutting edge (6) and chisel edge (9).

4. Drill according to one of Claims 1 to 3, **characterized in that** those parts of its cutting edges which emanate essentially radially from the drill axis (7) and whose cutting faces lie in the region of the core diameter, in particular the individual chisel edges (11, 12), enclose different angles (W1, W2) with the associated main cutting edge (6) (Fig. 4).

5. Drill according to Claim 2, **characterized in that** the difference in length (A-B) of those parts of its cutting edges whose cutting faces lie in the region of the core diameter, in particular of the individual chisel edges (11, 12), is at least 5%.

6. Drill according to Claim 3, **characterized in that** the difference of the radii (R2-R1) is at least 10%.

7. Drill according to Claim 4, **characterized in that** the difference in angle (W2-W1) is at least 1°.

8. Drill according to one of Claims 1 to 7, **characterized by** two cutting edges (6).

9. Drill according to one of Claims 1 to 8, **characterized by** three cutting edges (6).

## Revendications

1. Foret hélicoïdal pour le perçage à sec comportant un noyau centré (8), comportant une pointe de foret (17), qui est située sur l'axe (7) du foret et l'axe (7) du foret utilisé en tant qu'axe de symétrie aussi bien des rainures (13) de circulation de copeaux que des tranchants principaux (6), c'est-à-dire les parties des tranchants, dont les surfaces (16) de circulation des copeaux sont situées au voisinage des rainures (13) de circulation des copeaux, **caractérisé par** une dissymétrie des parties de tranchants du foret, dont les surfaces de circulation des copeaux sont situées dans la zone du noyau (8) du foret, notamment l'ensemble de son tranchant transversal (9).

2. Foret selon la revendication 1, **caractérisé en ce que** les parties, qui s'étendent essentiellement dans la direction radiale (10) à partir de l'axe (7) du foret, des tranchants du foret, dont les surfaces de circulation des copeaux sont situées au niveau de la circonférence du noyau, notamment les tranchants transversaux individuels (11, 12), possèdent des longueurs de (A, B) différentes.

3. Foret selon la revendication 1 ou 2, **caractérisé en ce que** les parties, qui s'étendent essentiellement radialement à partir de l'axe (7) du foret, des tranchants du foret, dont les surfaces de circulation de copeaux sont situées dans la zone d'un diamètre du noyau, notamment les tranchants transversaux (11, 12), possèdent des rayons différents (R1, R2) au niveau de la jonction entre le tranchant principal (6) et le tranchant transversal (9).

4. Foret selon l'une des revendications 1 à 3, **caractérisé en ce que** les parties, qui s'étendent essentiellement radialement à partir de l'axe (7) du foret, des tranchants du foret, dont les surfaces de circulation de copeaux sont situées dans la zone d'un diamètre du noyau, notamment les tranchants transversaux individuels (11, 12), font avec le tranchant principal associé (6) des angles (W1, W2) différents (figure 4).

5. Foret selon la revendication 2, **caractérisé en ce que** la différence (A-B) entre les longueurs des parties des tranchants du foret, dont les surfaces de circulation de copeaux sont situées dans la zone d'un diamètre du noyau, notamment les tranchants individuels (11, 12), est égale à au moins 5 %.

6. Foret selon la revendication 3, **caractérisé en ce que** la différence des rayons (R2-R1) est égale à au moins 10 %.

7. Foret selon la revendication 4, **caractérisé en ce que** la différence angulaire (W2-W1) est égale au moins à 1°.

8. Foret selon l'une des revendications 1 à 7, **caractérisé par** deux tranchants (6).

9. Foret selon l'une des revendications 1 à 8, **caractérisé par** trois tranchants (6).
